# EUROPÄISCHE PATENTSCHRIFT

(11) **EP 3 962 722 B1**
(45) Veröffentlichungstag und Bekanntmachung des Hinweises auf die Patenterteilung: **02.04.2025**
(21) Anmeldenummer: 20734663.6
(22) Anmeldetag: 17.06.2020
(51) Int. Cl.: B30B 9/24, B30B 15/32, B01D 33/073, B01D 33/46, B01D 33/64, A22C 17/04, A23N 1/00, A23N 4/08, B30B 9/20

(54) **Vorrichtung und Verfahren zum trennen von miteinander vermischten Stoffen unterschiedlicher Fliessfähigkeit**
Apparatus and method for separating substances of different flowability that are mixed together
Dispositif et procédé de séparation de matières de fluidités différentes mélangées entre elles

(30) Priorität: 20.06.2019 DE 102019116720
(43) Veröffentlichungstag der Anmeldung: 09.03.2022
(73) Patentinhaber: Nordischer Maschinenbau Rud. Baader GmbH + Co. KG, 23560 Lübeck (DE)
(72) Erfinder: SCHWARZ, Olaf, 23560 Lübeck (DE); HÄRTLEIN, Joachim, 23560 Lübeck (DE); FUCHS, Michael, 23560 Lübeck (DE); KARSTEN, Uwe, 23560 Lübeck (DE)
(74) Vertreter: Stork Bamberger Patentanwälte PartmbB
(86) Internationale Anmeldenummer: PCT/EP2020/066712
(87) Internationale Veröffentlichungsnummer: WO 2020/254373

(56) Entgegenhaltungen:
- DE-B- 1 219 905
- DE-C- 565 797
- GB-A- 1 162 166
- JP-A- S5 073 271
- US-A- 2 027 652
- US-A- 3 570 671
- US-A- 6 106 669

## Beschreibung

Die Erfindung betrifft eine Vorrichtung zum Trennen von miteinander vermischten Stoffen unterschiedlicher Fließfähigkeit, umfassend ein Rahmengestell, eine umlaufend antreibbare und am Rahmengestell gelagerte Hohltrommel mit perforierter Mantelfläche M, ein von außen im Bereich der Mantelfläche M der Hohltrommel liegendes, umlaufend antreibbares Presselement, derart, dass die Hohltrommel und das Presselement einen Produkt-Einzugskeil zum Zuführen eines aus Pressgut bestehenden Produktstroms zwischen die Hohltrommel und das Presselement sowie einen Pressbereich bilden, wobei dem Presselement in Förderrichtung T_{P} des Produktstroms hinter dem Pressbereich ein Abführelement zum Abführen von nach dem Pressen am Presselement verbleibenden Resten des Pressguts zugeordnet ist.

Die Erfindung betrifft auch ein Verfahren zum Trennen von miteinander vermischten Stoffen unterschiedlicher Fließfähigkeit, umfassend die Schritte: Zuführen eines aus Pressgut bestehenden Produktstroms in einen Produkteinzugskeil einer Vorrichtung zum Trennen von miteinander vermischten Stoffen unterschiedlicher Fließfähigkeit, der durch eine Hohltrommel mit perforierter Mantelfläche M und ein Presselement gebildet ist, umlaufendes Antreiben der Hohltrommel und des Presselementes zum Einziehen des Produktstroms in einen zwischen der Hohltrommel und dem Presselement gebildeten Pressbereich, wobei die leichter fließenden Bestandteile des Pressguts mittels des Presselementes durch die Perforation der Mantelfläche M in den inneren Hohlraum der Hohltrommel gepresst und abgeführt werden, während die schwerer fließenden Bestandteile des Pressguts als am Presselement verbleibende Reste des Pressguts in Förderrichtung T_{P} des Produktstroms hinter dem Pressbereich mittels eines dem Presselement zugeordneten Abführelementes abgeführt werden.

Solche Vorrichtungen und Verfahren kommen in verschiedenen Industriebereichen, insbesondere jedoch in der Lebensmittel verarbeitenden Industrie zum Einsatz. Mit den zuvor beschriebenen Vorrichtungen, die auch als Trenneinrichtungen oder Separatoren bezeichnet werden, lassen sich verschiedenartige Stoffe einem Separierprozess unterziehen. Dazu werden die zu trennenden Stoffe, also das Pressgut bzw. Trenngut, das auch als Separat bezeichnet wird, von außen mittels des Presselementes gegen die perforierte Mantelfläche M der Hohltrommel gedrückt. Unter diesem Druck werden die leichter fließenden Bestandteile des Pressguts als Hauptprodukt durch die Perforation der Mantelfläche M in den inneren Hohlraum der rotierenden Hohltrommel gepresst und abgeführt, während die schwerer fließenden Bestandteile des Pressgutes als Nebenprodukt außen auf der Mantelfläche der Hohltrommel und insbesondere auch an oder auf der Oberfläche des Presselementes verbleiben und separat abgegeben werden. Die Nebenprodukte, die auch als verbleibende Reste des Pressguts bezeichnet werden, können insbesondere am Presselement haften, auf dem Presselement liegen, vom Presselement abfallen und auch von der äußeren Mantelfläche M der Hohltrommel abfallen oder von dieser z.B. mittels eines Abstreifelementes gelöst werden. Alle Reste, die nicht durch die Perforation der Mantelfläche M der Hohltrommel gepresst werden, werden über das Abführelement als Reststrom aus der Vorrichtung gefördert und mindestens teilweise weiterverarbeitet.

Einer solchen Trennung zugänglich sind Stoffe, Materialien bzw. Produkte, die sich bzw. deren Zusammensetzung sich durch ihr voneinander abweichendes Fließverhalten unterscheiden. Die Möglichkeit und/oder Notwendigkeit der Trennung von miteinander vermischten Stoffen unterschiedlicher Fließfähigkeit besteht z.B. bei der Verwertung von Tierkörpern (etwa der Abtrennung des Fleisches als leichter fließender Bestandteil von der Haut, Sehnen, Knochen bzw. Gräten etc. als schwerer fließende Bestandteile) oder Teilen davon, bei der Verwertung von Obst und Gemüse (etwa der Abtrennung des Fruchtfleisches als leichter fließender Bestandteil von Schale, Stielen, Kernen bzw. Steinen etc. als schwerer fließende Bestandteile), bei der Aufarbeitung von fehlverpackten Lebensmitteln (etwa der Abtrennung von Butter oder Käse als leichter fließende Bestandteile vom Verpackungsmaterial als schwerer fließender Bestandteil) oder dergleichen. Konkrete Anwendungsbeispiele sind z.B. das Gewinnen von Restfleisch von Tierkarkassen oder Teilen davon, das Entkernen von Datteln oder das Entpacken von in Folie verpackten Käsescheiben.

Bei der Fleischgewinnung, dem Entkernen oder Entpacken oder jedem anderen entsprechenden Separieren wird ein aus Pressgut bestehender Produktstrom ausgehend von einem Produktzuführbereich über den Produkt-Einzugskeil zwischen dem Presselement und der Hohltrommel hindurch zu einem Produktausgabebereich gefördert. Beim Fördern des Produktstroms zwischen Hohltrommel und Presselement passiert der Produktstrom einen Pressbereich. Das Presselement ist mit einem vorgewählten bzw. voreingestellten Abstand, der auch den Wert Null haben kann, zur Mantelfläche M der Hohltrommel positioniert. Um das Pressgut in den Pressbereich, der im Bereich des kleinsten Abstandes zwischen Presselement und Hohltrommel liegt, zwischen die Hohltrommel und das Presselement zu führen und für den eigentlichen Trennvorgang zu sorgen, sind die Hohltrommel und das Presselement umlaufend angetrieben. Dabei werden die Stoffe unterschiedlicher Fließfähigkeit getrennt, indem die leichter fließenden Stoffe, am Beispiel der Verwertung der Tierkörper oder Teilen davon das Fleisch, mindestens teilweise in die Hohltrommel gedrückt und von dort abgeführt werden. Die schwerer fließenden Stoffe, wiederum am Beispiel der Verwertung von Tierkörpern oder Teilen davon die Knochen, Sehnen, Haut etc., werden in Förderrichtung T_{P} des Produktstroms hinter der Hohltrommel im Ausgabebereich für den Reststrom abgeführt und gesammelt.

Das Abführen erfolgt bei Vorrichtungen gemäß dem Stand der Technik mittels einer so genannten Produktrutsche, die mit geringem Abstand oder in Kontakt zum Presselement positioniert ist, derart, dass auf oder am Presselement liegendes/anhaftendes Nebenprodukt vom Presselement gelöst und/oder abgenommen wird und allein durch Schwerkraft entlang der Produktrutsche aus der Vorrichtung abgeführt wird. Durch das notwendige Gefälle der Rutsche ist die Ausgabehöhe begrenzt. Die Produktrutsche ist so steil zu positionieren, dass Auffangbehälter für die Nebenprodukte sehr dicht an der Vorrichtung platziert werden müssen und die abgeführten Nebenprodukte stets am äußeren Rand des mit dem Nebenprodukt zu befüllenden Auffangbehälters gesammelt werden, wodurch die Auffangbehälter in kurzen Abständen gewechselt werden müssen. Die starre und fest montierte Produktrutsche, die üblicherweise aus einem Blech hergestellt ist, führt gerade in Fällen, in denen die Produktrutsche in Kontakt mit dem Presselement steht, des Weiteren zu einem erhöhten Verschleiß des Presselementes, wodurch sich die Lebensdauer der Komponenten verringert. Im Übrigen bilden sich bei dem Einsatz eines Pressbandes als Presselement - das Pressband wird an den äußeren Rändern durch den Pressdruck hochgedrückt - zwischen dem Pressband, das auch als Quetschband bezeichnet wird, und der Produktrutsche Spalte, in denen sich Nebenprodukte verfangen und sammeln können, wodurch es zu Betriebsstörungen kommen kann. Die genannten Nachteile führen zu einer verminderten Leistungsfähigkeit und reduzierten Produktqualität.

Das Dokument JP S50 73271 A offenbart eine Vorrichtung gemäß dem Oberbegriff des Anspruchs 1 und ein Verfahren gemäß dem Oberbegriff des Anspruchs 11.

Der Erfindung liegt somit die Aufgabe zugrunde, eine Vorrichtung mit verbesserter Leistungsfähigkeit und Produktqualität zu schaffen sowie ein entsprechendes Verfahren vorzuschlagen.

Diese Aufgabe wird durch eine Vorrichtung gemäß Anspruch 1 mit einem aktiv atreibbaren, endlosen Abführband gelöst. Das Abführband, das z.B. um Umlenkrollen geführt ist, von denen eine Umlenkrolle als Antriebsrolle ausgebildet ist, ist am oder nahe am Presselement angeordnet, derart, dass die verbleibenden Reste vom Presselement ab- und/oder übernommen und abgeführt werden können. Durch das aktive Abführen der Reste können diese zuverlässig von der Vorrichtung weg z.B. in Auffangbehälter gefördert werden, und zwar in einer gleichmäßigen Verteilung insbesondere mittig in den Auffangbehälter. Das aktive Abführen des Reststroms führt zu einer verbesserten Leistungsfähigkeit der Vorrichtung sowie zu einer erhöhten Produktqualität.

Gemäß der Erfindung ist das Abführband in einem Wirkbereich mit dem Presselement zur Übernahme der Reste des Pressguts in einem minimalen Abstand zum Presselement positioniert. Der Wirkbereich beschreibt den Bereich, in dem die vom Presselement fallenden oder vom Presselement gelösten Reste übernommen werden. Minimaler Abstand bedeutet im Sinne der Erfindung explizit auch den Abstand gleich Null. Die Größe des minimalen Abstands hängt wesentlich vom zu pressenden Pressgut ab. Bei bestimmten Pressgütern, insbesondere solchen, die eine weiche Konsistenz und/oder einen geringen Anteil schwerer fließender Anteile aufweisen, ist der minimale Abstand z.B. Null. Mit anderen Worten liegt das Abführband voreingestellt an dem Presselement an. Ein Anliegen des Abführbandes am Presselement ist vorteilhaft, um Reste effektiv vom Presselement zu lösen und dem Abführband zuführen zu können. Für andere Pressgüter, insbesondere solche mit einem hohen Anteil schwerer fließender Anteile und/oder größeren Stücken im Pressgut, ist der minimale Abstand z.B. wenige Millimeter. Der minimale Abstand ist entsprechend nicht auf einen festen Wert zu reduzieren. Ein Abstand größer Null ist vorteilhaft, um einen verschleißreduzierenden Betrieb zu gewährleisten. Mit anderen Worten werden durch einen Luftspalt zwischen Abführband und Presselement die für das Pressen zusammenwirkenden Komponenten geschont.

In einer bevorzugten Weiterbildung sind das Abführband und das Presselement im Wirkbereich gegenläufig angetrieben. Mit dieser Ausbildung wird ein besonders effektives und zuverlässiges Abstreifen und Übernehmen der abzuführenden Reste vom Presselement gewährleistet.

Eine besonders bevorzugte Ausführungsform ist dadurch gekennzeichnet, dass das Abführband als Abstreiferband ein aus Kunststoff bestehendes, umlaufend antreibbares Gliederband mit mindestens einem quer zur Abführrichtung T_{R} verlaufenden Steg ist, wobei das Abstreiferband derart zum Presselement eingestellt ist, dass zwischen jedem Steg und dem Presselement ein minimaler Abstand besteht. Hinsichtlich des minimalen Abstandes gilt entsprechend das zuvor Beschriebene. Vorzugsweise sind mehrere Stege vorgesehen, die auch als Stollen bezeichnet werden. Die Stege/Stollen sind in Antriebsrichtung A_{A} des Abführbandes/Abstreiferbandes beabstandet zueinander angeordnet und verteilen sich gleichmäßig umlaufend über das Abführband/Abstreiferband. Die Stege/Stollen erstrecken sich vorzugsweise senkrecht zur jeweiligen Transportebene E_{A} des Abstreiferbandes und quer zur Antriebsrichtung A_{A} über die gesamte Breite. Durch die Stege/Stollen können Reste zuverlässig und wirkungsvoll vom Presselement gekratzt werden. Die Stege/Stollen stellen weiterhin das zuverlässige Lösen der Reste beim Abgeben in den Auffangbehälter sicher.

Gemäß der Erfindung ist das endlose Abführband um einen starren, ortsfesten Transportabschnitt und einen relativ zum starren Transportabschnitt schwenkbaren Übernahmeabschnitt geführt, wobei der schwenkbare Übernahmeabschnitt zur Schaffung eines beweglichen Abschnitts des Abführbandes um eine Schwenkachse A schwenkbar am Transportabschnitt gelagert ist. Der Transportabschnitt und der Übernahmeabschnitt sind ebenso wie die Umlenk- und/oder Antriebsrollen zwischen einem Obertrum und einem Untertrum des Abführbandes angeordnet und können z.B. am Rahmengestell angeordnet bzw. gelagert oder gehalten sein. Der Transportabschnitt bildet für das Abführband im Bereich des Obertrums eine im Wesentlichen horizontal gerichtete Stützfläche. Der Übernahmeabschnitt ist gegenüber dem Transportabschnitt abgeknickt/abfallend ausgerichtet und ist dem Wirkbereich zugewandt bzw. bildet den Wirkbereich zum Presselement. Durch die Bewegbarkeit des Übernahmeabschnitts gegenüber dem Transportabschnitt ist die Vorrichtung produktunabhängig einsetzbar, da das Abführband bzw. deren Positionierung zum Presselement auf einfache Weise an unterschiedliche Produkte anpassbar ist. Des Weiteren ermöglicht die Schwenkbarkeit des Übernahmeabschnitts einen Ausgleich und eine Anpassung an unterschiedliche Positionen des Presselementes, am Beispiel eines Pressbandes als Presselement an z.B. durch Verschleiß oder Voreinstellung bedingte Änderungen des Bandverlaufes.

Vorteilhafterweise ist der schwenkbare Übernahmeabschnitt federbelastet am Rahmengestell gehalten. Mit dieser Ausbildung können die vorstehend beschriebenen Vorteile noch effektiver erreicht werden. Durch die Federbelastung des Übernahmeabschnitts kann dieser z.B. von Bestandteilen der Reste, die z.B. am Presselement haften und nicht vom Abführband erfasst werden, gegen die Federkraft nach unten/außen, also weg vom Presselement, ausweichen, wodurch die für das Pressen zusammenwirkenden Komponenten geschont werden.

Eine bevorzugte Weiterbildung zeichnet sich dadurch aus, dass der Schwenkachse A ein Stellarm zugeordnet ist, der über ein Federelement mit einem Stellelement verbunden ist, das am Rahmengestell angeordnet ist. Mit dem Federelement und dem Stellelement lässt sich die Federkraft einstellen, so dass unterschiedliche Produkte mit unterschiedlichen Federkräften vom Presselement gelöst und/oder übernommen werden können.

Zweckmäßigerweise liegt der Stellarm mittels der Federkraft des Federelementes an einem am Rahmengestell angeordneten Anschlagelement an, wobei das Anschlagelement zur Einstellung der Größe des Abstandes zwischen dem Abführband im Bereich des schwenkbaren Übernahmeabschnitts und der Oberfläche des Presselementes, also im Wirkbereich, verstellbar ausgebildet ist. Auch das Anschlagelement führt im Zusammenwirken mit dem Federelement zu einer individuellen Anpassung der Vorrichtung an unterschiedliche Produkte und/oder Betriebszustände und -bedingungen. Über die Änderung des Anschlagelementes bzw. die Position des Anschlagelementes kann z.B. die Größe des Abstandes des Abführbandes zum Presselement verändert und an das zu bearbeitende Produkt und/oder unterschiedliche Betriebszustände- und bedingungen angepasst werden. Das Federelement hält den Übernahmeabschnitt grundsätzlich gegen den Anschlag in der voreingestellten Position. Gegen die Federkraft kann der Übernahmeabschnitt vom Anschlagelement gelöst bzw. abgehoben werden, beispielsweise ausgelöst durch feste Bestandteile im abzuführenden Reststrom.

Eine besonders bevorzugte Ausführungsform ist dadurch gekennzeichnet, dass das Presselement ein von außen an die Mantelfläche M unter Umschlingung eines Teils des Umfangs der Hohltrommel anpressbares, endloses Pressband ist, das umlaufend antreibbar ist und ein zur Hohltrommel weisendes Obertrum und ein Rückführtrum umfasst, wobei auf der der Hohltrommel entgegengesetzten Seite des Pressbandes eine Stützvorrichtung für das Pressband mit wenigstens einem Stützelement angeordnet ist. Das Pressband als Presselement eignet sich besonders gut zum Zusammenwirken mit einem Abführband als Abführelement, da zum einen ein größerer und damit effektiverer Wirkbereich geschaffen werden kann und zum anderen auch von der Hohltrommel abfallende oder abgestreifte Reste vom Pressband aufgenommen und in den Wirkbereich zum Abführband gefördert werden können.

Vorteilhafterweise ist das Pressband in Förderrichtung T_{P} des Produktstroms hinter dem Pressbereich um eine relativ zur Hohltrommel einstellbare Andrückwalze geführt, wobei der schwenkbare Übernahmeabschnitt des Abführbandes unterhalb der Andrückwalze positioniert ist. Mit dieser Ausbildung und Anordnung ist eine besonders effektive Übernahme der am Pressband haftenden und vom Pressband fallenden Reste gewährleistet. Mit der Platzierung des schwenkbaren Übernahmeabschnitts des Abführbandes unterhalb der einstellbaren Andrückwalze kann unmittelbar auf Veränderungen der Position der Andrückwalze, z.B. durch Abnutzung der Hohltrommel oder bedingt durch den zu pressenden Produktstrom, reagiert werden, indem die Position des Abführbandes zur Aufrechterhaltung des optimalen Abstands zum um die Andrückwalze geführten Pressband angepasst werden kann.

Eine bevorzugte Ausführungsform ist dadurch gekennzeichnet, dass der sich über die gesamte Breite des Pressbandes erstreckende, schwenkbare Übernahmeabschnitt des Abführbandes im Wirkbereich eine aufsteigende Ausrichtung aufweist, während der Untertrum des Pressbandes im Wirkbereich eine absteigende Ausrichtung aufweist. Damit wird eine zuverlässige und sichere sowie effektive Übernahme der anfallenden Reste sichergestellt.

Zweckmäßigerweise verlaufen das Abführband und das Pressband zur Bildung eines flächigen Wirkbereiches mindestens abschnittsweise im Wesentlichen parallel. Durch die quasi überlappende Anordnung von Pressband und Abführband ist in Abgrenzung zu einer linienförmigen Übernahmekante ein flächiger Übernahmebereich bzw. Wirkbereich geschaffen, mit dem die abzuführenden Reste effektiver vom Presselement übernommen und abgeführt werden können.

Die Aufgabe wird auch durch ein Verfahren gemäß Anspruch 11 gelöst.

Gemäß der Erfindung werden die nach dem Pressen am Presselement verbleibenden Reste des Pressguts mittels des umlaufend antreibbaren Abführbandes von einem endlosen, umlaufend antreibbaren Pressband als Presselement in einem flächigen Wirkbereich gelöst, übernommen und gegen die Antriebsrichtung A_{P} des Pressbandes abgeführt.

Bevorzugt werden die nach dem Pressen am Presselement verbleibenden Reste des Pressguts im Wesentlichen horizontal aus der Vorrichtung abgeführt und etwa mittig in einen Auffangbehälter abgegeben.

Besonders bevorzugt wird das Verfahren mit einer Vorrichtung nach einem oder mehreren der Ansprüche 1 bis 12 durchgeführt.

Die sich daraus ergebenden Vorteile wurden bereits im Zusammenhang mit der Vorrichtung ausführlich beschrieben, weshalb zur Vermeidung von Wiederholungen auf die entsprechenden Ausführungen verwiesen wird.

Weitere zweckmäßige und/oder vorteilhafte Merkmale und Weiterbildungen der Vorrichtung ergeben sich aus den Unteransprüchen und der Beschreibung. Besonders bevorzugte Ausführungsformen der Vorrichtung sowie das Verfahren werden anhand der beigefügten Zeichnung näher erläutert. In der Zeichnung zeigt:
- Fig. 1: eine schematische Darstellung einer erfindungsgemäßen Ausführungsform der Vorrichtung mit einem Pressband als Presselement in perspektivischer Ansicht,
- Fig. 2: eine schematische Darstellung der Vorrichtung ohne Rahmengestell in perspektivischer Darstellung,
- Fig. 2a: eine Ausschnittvergrößerung der Mantelfläche der Hohltrommel gemäß Figur 2,
- Fig. 3: die Darstellung gemäß Figur 2 in Vorderansicht, und

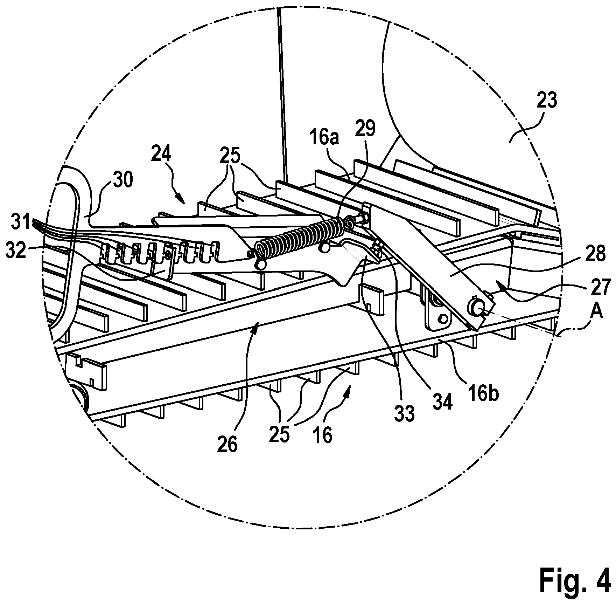

- Fig. 4: eine Ausschnittvergrößerung der Feststelleinrichtung gemäß Figur 2.

Die in der Zeichnung dargestellte Vorrichtung dient zum Trennen eines Produktstroms aus Pressgut, das überwiegend aus Fleisch, Fett, Knorpeln, Sehnen, Haut, Knochen(- resten) etc. besteht, wobei insbesondere das Fleisch und das Fett als leichter fließende Bestandteile betrachtet werden und die Knorpel, die Haut, die Sehnen und die Knochen(-reste) als schwerer fließende Bestandteile angesehen werden. Die Vorrichtung ist jedoch in gleicher Weise zum Trennen anderer Pressgüter und Kombinationen von Pressgütern einsetzbar.

Die dargestellte Vorrichtung 10 ist zum Trennen von miteinander vermischten Stoffen unterschiedlicher Fließfähigkeit ausgebildet und eingerichtet und umfasst ein Rahmengestell 11, eine umlaufend antreibbare und am Rahmengestell 11 gelagerte Hohltrommel 12 mit perforierter Mantelfläche M, ein von außen im Bereich der Mantelfläche M der Hohltrommel 12 liegendes, umlaufend antreibbares Presselement 13, derart, dass die Hohltrommel 12 und das Presselement 13 einen Produkt-Einzugskeil 14 zum Zuführen eines aus Pressgut bestehenden Produktstroms zwischen die Hohltrommel 12 und das Presselement 13 sowie einen Pressbereich P bilden, wobei dem Presselement 13 in Förderrichtung T_{P} des Produktstroms hinter dem Pressbereich P ein Abführelement 15 zum Abführen von nach dem Pressen am Presselement 13 verbleibenden Resten des Pressguts zugeordnet ist.

Diese Vorrichtung 10 zeichnet sich erfindungsgemäß dadurch aus, dass das Abführelement 15 ein aktiv antreibbares, endloses Abführband 16 zum Abführen der am Presselement 13 verbleibenden Reste des Pressguts in Abführrichtung T_{R} ist.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Vorrichtung 10 weiterbilden können.

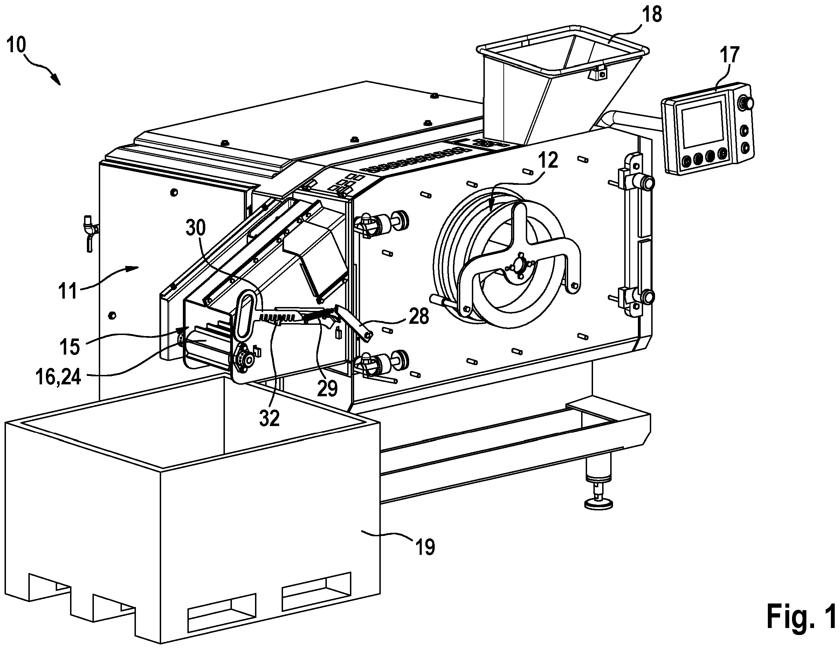

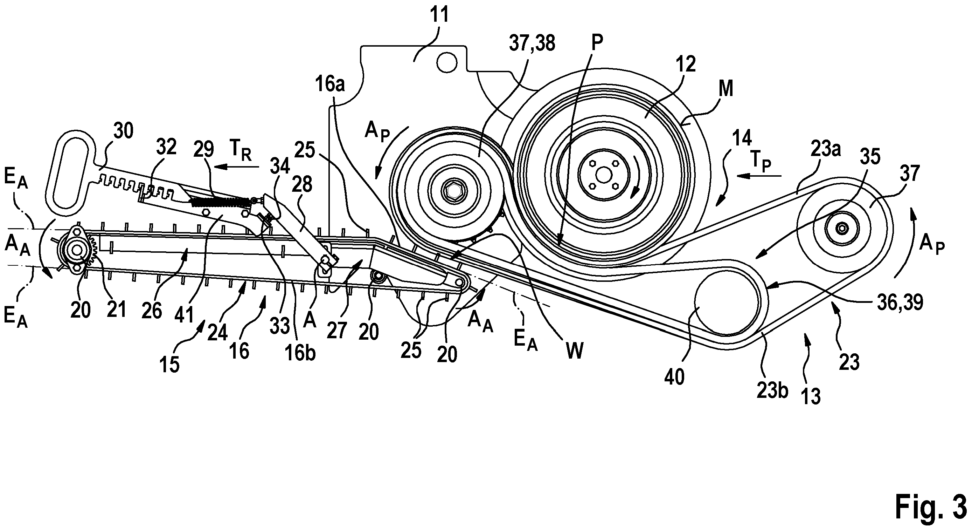

Das Rahmengestell 11 kann z.B. eine Profilkonstruktion oder ein mindestens teilweise geschlossenes Gehäuse sein. Der Hohltrommel 12 ist ein nicht explizit dargestellter Antrieb zugeordnet. Mittels des Antriebs ist die Hohltrommel 12 in beide Richtungen antreibbar. Bevorzugt ist die Hohltrommel 12 in Antriebsrichtung im Uhrzeigersinn angetrieben (siehe insbesondere Figur 3). Die Vorrichtung 10 kann mit Einzelantrieben für die Hohltrommel 12 und das ebenfalls in beide Richtungen antreibbare Presselement 13 oder mit einem gemeinsamen Antrieb sowie Getriebeelementen ausgestattet sein. Der oder jeder Antrieb kann an eine ebenfalls nicht explizit dargestellte Steuerungs- und/oder Regelungseinrichtung angeschlossen sein. Die Vorrichtung 10 lässt sich beispielsweise über ein Bedienpanel 17 bedienen. Die Versorgung der Vorrichtung 10 mit dem zu trennenden Produktstrom kann optional z.B. über eine Rutsche, einen Zuführtrichter 18 wie in Figur 1 oder ein aktiv angetriebenes Zuführorgan erfolgen. Das in der Vorrichtung 10 gewonnene Hauptprodukt, nämlich die vom Presselement 13 durch die Perforation der Hohltrommel 12 in den inneren Hohlraum H der Hohltrommel 12 gepressten, leichter fließenden Bestandteile des Pressguts werden aus der Hohltrommel 12 durch nicht explizit dargestellte Komponenten abgeführt und weiterverarbeitet. Das Nebenprodukt, nämlich die schwerer fließenden Bestandteile des Pressguts, die nicht durch die Perforation gepresst werden und bei der Förderung durch die Vorrichtung 10 außen an der Hohltrommel 12 und insbesondere am und auf dem Presselement 13 als Rest verbleiben, werden mittels des Abführbandes 16 als Reststrom aktiv z.B. mittig in einen Auffangbehälter 19 gefördert, darin gesammelt und ggf. weiterverarbeitet.

Das Abführband 16 ist mindestens um zwei Umlenkelemente 20 geführt und weist ein Obertrum 16a (Transporttrum) und ein Untertrum 16b (Rückführtrum) auf. Vorzugsweise ist einem Umlenkelement 20 ein Antrieb 21 zugeordnet, der ebenfalls mit der Steuerungs- und/oder Regelungseinrichtung verbunden sein kann. Das Abführband 16 ist bevorzugt ebenfalls mindestens im Bereich des angetriebenen Umlenkelementes 20 am Rahmengestell 11 abgestützt bzw. angeordnet. Das Abführband 16 kann aber auch separat zum Rahmengestell 11 ausgebildet und positioniert sein. Mit dem Antrieb 21 ist das Abführband 16 in beide Richtungen antreibbar. Bevorzugt ist das Abführband 16 in Antriebsrichtung A_{A} gegen den Uhrzeigersinn angetrieben (siehe insbesondere Figur 3). Das aus der Vorrichtung 10 abzuführende Nebenprodukt, also der aus den schwerer fließenden Bestandteilen bestehende Reststrom des Pressguts, wird entsprechend in Abführrichtung T_{R} gefördert. Die (resultierende) Abführrichtung T_{R} des Reststroms entspricht vorzugsweise und im Wesentlichen der (resultierenden) Förderrichtung T_{P} des Produktstroms durch den Pressbereich P.

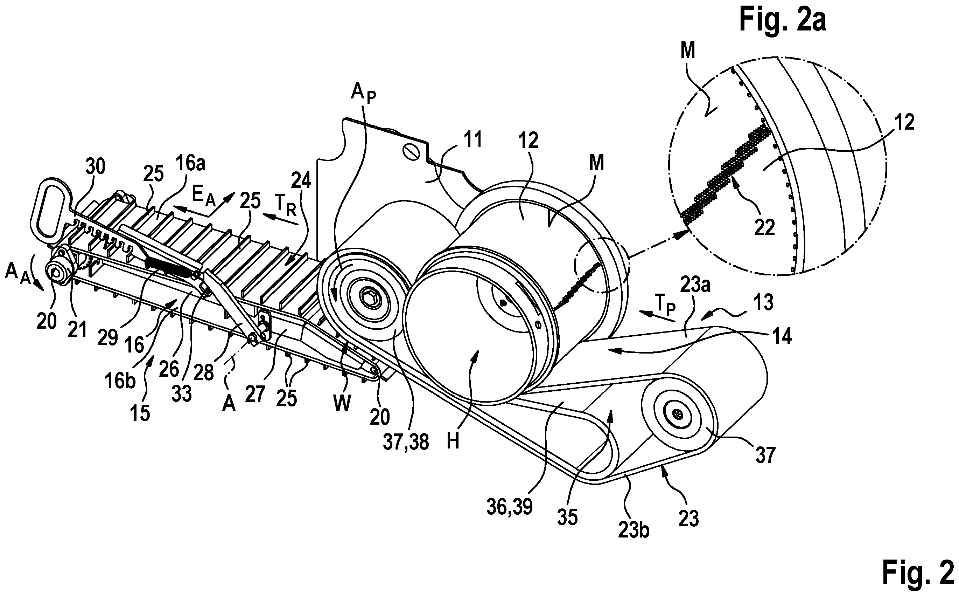

Die Hohltrommel 12 weist wie erwähnt eine perforierte Mantelfläche M auf. In der Figur 2a ist im vergrößerten Ausschnitt das Lochmuster 22 als Perforation zu erkennen. Die Anzahl, Größe und Anordnung der Löcher, Öffnungen, Bohrungen oder dergleichen kann variieren. Bevorzugt erstreckt sich die Perforation über die gesamte Mantelfläche M. In der Figur 2 wurde der besseren Übersicht halber auf die Darstellung der Perforation im Wesentlichen verzichtet. Zum Pressen des Pressguts gegen die Hohltrommel 12 und teilweise durch die Perforation in die Hohltrommel 12 ist das Presselement 13 vorzugsweise mit einer einstellbaren Presskraft beabstandet zu der oder in Kontakt mit der Mantelfläche M positioniert. Das Presselement 13 kann auch nachgebend, z.B. über ein Federelement oder über einen Pneumatikzylinder oder dergleichen zur Hohltrommel 12 ausgebildet und angeordnet sein. In nicht dargestellten Ausführungsformen ist das Presselement 13 z.B. eine umlaufend antreibbare Presstrommel. Bevorzugt ist das Presselement 13 jedoch ein umlaufend antreibbares Pressband 23, das weiter unten detailliert beschrieben wird.

Das Abführband 16 ist in einem Wirkbereich W mit dem Presselement 13 zur Übernahme der Reste des Pressguts in einem minimalen Abstand zum Presselement 13 positioniert. Der minimale Abstand kann Null sein. Das bedeutet, dass das Abführband 16 mindestens teilweise oder abschnittsweise mit dem Obertrum 16a am Presselement 13 anliegt, um z.B. am Presselement 13 haftende Reste besonders effektiv abkratzen zu können. Der voreingestellte Abstand kann aber auch größer Null sein, beispielsweise in einem Größenbereich zwischen 1 mm und 3 mm oder in einem Größenbereich zwischen 5 mm und 10 mm. Selbstverständlich sind letztlich in Abhängigkeit des zu verarbeitenden Produktstroms auch andere Abstände wählbar.

Wie bereits erwähnt, sind das Abführband 16 und das Presselement 13 jeweils beliebig antreibbar, und zwar hinsichtlich Geschwindigkeit und Antriebsrichtung. Bevorzugt sind das Abführband 16 und das Presselement 13 im Wirkbereich W gegenläufig angetrieben, so dass eine Relativbewegung zum effektiven Lösen und/oder Übernehmen der Reste des Produktstroms vom Presselement 13 auf das Abführband 16 gegeben ist. Besonders bevorzugt ist das Abführband 16 als Abstreiferband 24 ein aus Kunststoff bestehendes, umlaufend antreibbares Gliederband mit mindestens einem quer zur Abführrichtung T_{R} verlaufenden Steg 25, wobei das Abstreiferband 24 derart zum Presselement 13 eingestellt ist, dass zwischen jedem Steg 25 und dem Presselement 13 ein minimaler Abstand besteht. Hinsichtlich des minimalen Abstandes gilt das Vorstehende entsprechend. In der gezeigten Ausführung ist das Abstreiferband 24 umlaufend mit Stegen 25 in gleichem Abstand zueinander versehen. Die Stege 25 erstrecken sich quer zur Abführrichtung T_{R} über die gesamte Breite des Abstreiferbandes 24. Ausgehend von der jeweiligen Transportebene E_{A} des Abstreiferbandes 24 erstrecken sich die Stege 25 in der dargestellten Ausführungsform senkrecht nach oben und berühren im Wirkbereich W das Presselement 13 bzw. das Pressband 23. Anstelle der Stege 25 können auch andere Mitnehmer, Abstreifer, Kratzer oder dergleichen vorgesehen sein. Das Abstreiferband 24 kann auch aus anderen Materialien bestehen. Beispielsweise kann auch ein Kettenförderer aus Metall eingesetzt werden, der als Stege 25 Gummilippen aufweist. Auch die Anzahl, Ausbildung, Verteilung und Positionierung der Stege 25 kann variieren. In nicht dargestellten Ausführungsformen kann auch ein Abführband 16 ohne Stege 25 oder dergleichen eingesetzt werden, z.B. mit einer rauhen oder strukturierten Oberfläche. Das endlose Abführband 16 ist in der dargestellten Ausführungsform um einen starren, ortsfesten Transportabschnitt 26 und einen relativ zum starren Transportabschnitt 26 schwenkbaren Übernahmeabschnitt 27 geführt, wobei der schwenkbare Übernahmeabschnitt 27 zur Schaffung eines beweglichen Abschnitts des Abführbandes 16 um eine Schwenkachse A schwenkbar am Transportabschnitt 26 gelagert ist. Der Transportabschnitt 26 und der Übernahmeabschnitt 27 sind zwischen Obertrum 16a und Untertrum 16b angeordnet und sind ergänzend zu den Umlenkelementen 20 vorgesehen. Insbesondere der Übernahmeabschnitt 27 kann optional auch einzelne Umlenkelemente 20 ersetzen. Der Transportabschnitt 26 kann z.B. aus einer Platte oder aus einfachen Profilen gebildet sein, die das Abführband 16 im Bereich des Obertrums 16a stützen. Der Transportabschnitt 26 ist bevorzugt am Rahmengestell 11 befestigt und bildet den festen Teil des Abstreiferbandes 24. Der schwenkbare Übernahmeabschnitt 27 ist vorzugsweise federbelastet am Rahmengestell 11 gehalten und bildet den beweglichen und gegen die Federkraft nachgebenden Teil des Abstreiferbandes 24. Der Übernahmeabschnitt 27 ist bevorzugt zur besseren Positionierung zum Presselement 13 und zur Bildung eines maximal großen Wirkbereiches W abgeknickt ausgebildet, beispielsweise ein abgeknicktes Blech. Die Form und Ausbildung des Übernahmeabschnitts 27 sowie die Ausrichtung des Übernahmeabschnitts 27 zum Transportabschnitt 26 kann jedoch variieren.

Der Übernahmeabschnitt 27 kann mit seiner Schwenkachse A federbelastet direkt am Rahmengestell 11 gehalten sein. Vorzugsweise ist der Schwenkachse A ein Stellarm 28 zugeordnet, der verdrehfest mit der Schwenkachse A verbunden ist und über ein Federelement 29 mit einem Stellelement 30 verbunden ist, das am Rahmengestell 11 angeordnet ist. Das Stellelement 30 kann z.B. mehrere Rastpositionen 31 aufweisen, die mit einer am Rahmengestell 11 befestigten Rastnase 32 in Eingriff bringbar ist. Das Stellelement 30 mit den Rastpositionen 31 und der Rastnase 32 sowie das Federelement 29 bilden eine Stelleinrichtung. Über die unterschiedlichen Rastpositionen 31 lässt sich die Federkraft einstellen. Anstelle des Federelementes 29 mit dem Stellelement 30 ist z.B. auch ein Pneumatikzylinder einsetzbar. In anderen Weiterbildungen kann die Kraft auch mittels Magneten aufgebracht werden.

Der Stellarm 28 liegt mittels der Federkraft des Federelementes 29 an einem am Rahmengestell 11 angeordneten Anschlagelement 33 an, wobei das Anschlagelement 33 zur Einstellung der Größe des Abstandes zwischen dem Abführband 16 im Bereich des schwenkbaren Übernahmeabschnitts 27 und der Oberfläche des Presselementes 13, also im Wirkbereich W, verstellbar ausgebildet ist. Dazu umfasst das Anschlagelement 33 im gezeigten Beispiel eine Stellschraube 34, mittels der durch Drehen die Position des Anschlags veränderbar ist. Das Anschlagelement 33 kann auch in anderer Weise ausgebildet sein. Das Anschlagelement 33 mit der Stellschraube 34 einerseits und die Rastnase 32 andererseits können auch an einer gemeinsamen Schiene 41 angeordnet sein, die lösbar am Rahmengestell 11 befestigt ist.

Wie weiter oben bereits erwähnt, ist das Presselement 13 bevorzugt ein Pressband 23, und zwar ein von außen an die Mantelfläche M unter Umschlingung eines Teils des Umfangs der Hohltrommel 12 anpressbares, endloses Pressband 23, das umlaufend (in beide Richtungen) antreibbar ist und ein zur Hohltrommel 12 weisendes Obertrum 23a (Presstrum) und ein Untertrum 23b (Rückführtrum) umfasst, wobei auf der der Hohltrommel 12 entgegengesetzten Seite des Pressbandes 23 eine Stützvorrichtung 35 für das Pressband 23 mit wenigstens einem Stützelement 36 angeordnet ist. Das Pressband 23 ist um mehrere Umlenkelemente 37 geführt, wobei ein Umlenkelement 37 als Antriebswalze 38 ausgebildet und eingerichtet ist. Die Antriebswalze 38 ist optional gleichzeitig als verstellbare Andrückwalze ausgebildet. Mittels der Antriebswalze 38 ist das Pressband 23 vorzugsweise in Antriebsrichtung A_{P} gegen den Uhrzeigersinn antreibbar (siehe insbesondere Figur 3).

Das Stützelement 36 ist vorzugsweise eine Stützkette 39, die um die Antriebswalze 38 und mindestens ein zusätzliches Umlenkelement 40 geführt ist. Die Stützkette 39 ist zur Einstellung des Drucks vom Pressband 23 an die Hohltrommel 12 verstellbar ausgebildet und eingerichtet, vorzugsweise über die verstellbar ausgebildete Andrückwalze. Das Stützelement 36 kann aber auch in anderer Weise, z.B. durch eine Rollenbahn oder dergleichen, ausgebildet sein. Das Pressband 23 ist in Förderrichtung T_{P} des Produktstroms hinter dem Pressbereich P um die relativ zur Hohltrommel einstellbare Andrückwalze geführt, wobei der schwenkbare Übernahmeabschnitt 27 des Abführbandes 16 unterhalb der Andrückwalze positioniert ist.

Der sich über die gesamte Breite des Pressbandes 23 erstreckende, schwenkbare Übernahmeabschnitt 27 des Abführbandes 16 weist im Wirkbereich W eine aufsteigende Ausrichtung auf, während das Untertrum 23b des Pressbandes 23 im Wirkbereich W eine absteigende Ausrichtung aufweist. Das um den Übernahmeabschnitt 27 geführte Abführband 16 und das Untertrum 23b des Pressbandes 23 sind im Wirkbereich W nicht nur gegenläufig angetrieben, sondern überlappen sich auch derart, dass das Abführband 16 und das Pressband 23 zur Bildung eines flächigen Wirkbereiches W mindestens abschnittsweise im Wesentlichen parallel verlaufen.

Im Folgenden wird das erfindungsgemäße Verfahren anhand der Zeichnung näher erläutert:
Das Verfahren dient zum Trennen von miteinander vermischten Stoffen unterschiedlicher Fließfähigkeit. Ein aus Pressgut bestehender Produktstrom wird in einen Produkt-Einzugskeil 14 einer Vorrichtung 10 zum Trennen von miteinander vermischten Stoffen unterschiedlicher Fließfähigkeit, der durch eine Hohltrommel 12 mit perforierter Mantelfläche M und ein Presselement gebildet ist, zugeführt. Die Zuführung kann manuell oder automatisiert sowie passiv oder aktiv erfolgen. Die Hohltrommel 12 und das Presselement 13 werden zum Einziehen des Produktstroms in einen zwischen der Hohltrommel 12 und dem Presselement 13 gebildeten Pressbereich P umlaufend angetrieben, wobei die leichter fließenden Bestandteile des Pressguts mittels des Presselementes 13 durch die Perforation der Mantelfläche M in den inneren Hohlraum H der Hohltrommel 12 gepresst und abgeführt werden, während die schwerer fließenden Bestandteile des Pressguts als am Presselement 13 verbleibende Reste des Pressguts als Reststrom in Förderrichtung T_{P} des Produktstroms hinter dem Pressbereich P mittels eines dem Presselement 13 zugeordneten Abführelementes 15 abgeführt werden.

Dieses Verfahren zeichnet sich erfindungsgemäß dadurch aus, dass die nach dem Pressen am Presselement 13 verbleibenden Reste des Pressguts mittels eines aktiv antreibbaren, endlosen Abführbandes 16 aktiv in Abführrichtung T_{R} abgeführt werden.

Der z.B. aus einer Mischung aus Fleisch, Fett, Sehnen, Knorpeln und Haut als Pressgut bestehende Produktstrom wird in einer Vorrichtung 10, in der das Presselement 13 ein Pressband 23 ist, durch die im Pressbereich P gleichgerichtet angetriebene Hohltrommel 12 und das Pressband 23 in den Pressbereich P gezogen. Die leichter fließenden Bestandteile (Fleisch, Fett) werden durch die Perforation in den Hohlraum H der Hohltrommel 12 gepresst und abgeführt. Die schwerer fließenden Bestandteile (Haut, Knorpel, Sehnen) verbleiben als Reststrom am und auf dem Pressband 23 und/oder an der Mantelfläche M der Hohltrommel 12. Das an der Mantelfläche M haftende Material kann z.B. durch geeignete Abstreifelemente von der Mantelfläche M gekratzt werden und fällt in Förderrichtung T_{P} des Produktstroms hinter der Hohltrommel 12 auf das Pressband 23. Durch den umlaufenden Antrieb des Pressbandes 23 trifft der gesammelte Reststrom auf das Abführband 16. Einzelne Bestandteile des Reststroms fallen vom Pressband 23 auf das Abführband 16. Andere Bestandteile des Reststroms, die am Pressband 23 haften, werden im Wirkbereich W von Pressband 23 und Abstreiferband 24 als Abführband 16 von den Stegen 25 des Abstreiferbandes 24 vom Pressband 23 gelöst und durch den umlaufenden Antrieb des Abstreiferbandes 24 in Antriebsrichtung A_{A} in Förderrichtung T_{R} abgeführt.

Dabei werden die nach dem Pressen am Presselement 13 verbleibenden Reste des Pressguts mittels des umlaufend antreibbaren Abführbandes 16 von dem endlosen, umlaufend antreibbaren Pressband 23 als Presselement 13 in einem flächigen Wirkbereich W gelöst, übernommen und gegen die Antriebsrichtung A_{P} des Pressbandes 23 abgeführt. Die nach dem Pressen am Presselement 13 verbleibenden Reste des Pressguts, also der Reststrom, wird im Wesentlichen horizontal aus der Vorrichtung 10 abgeführt und etwa mittig in einen Auffangbehälter 19 abgegeben.

Besonders bevorzugt wird das Verfahren mit einer Vorrichtung 10 nach einem oder mehreren der Ansprüche 1 bis 10 durchgeführt, also mit einer Vorrichtung 10, wie sie vorstehend ausführlich beschrieben wurde.

## Patentansprüche

1. Vorrichtung (10) zum Trennen von miteinander vermischten Stoffen unterschiedlicher Fließfähigkeit, umfassend ein Rahmengestell (11), eine umlaufend antreibbare und am Rahmengestell (11) gelagerte Hohltrommel (12) mit perforierter Mantelfläche (M), ein von außen im Bereich der Mantelfläche (M) der Hohltrommel (12) liegendes, umlaufend antreibbares Presselement (13), derart, dass die Hohltrommel (12) und das Presselement (13) einen Produkt-Einzugskeil (14) zum Zuführen eines aus Pressgut bestehenden Produktstroms zwischen die Hohltrommel (12) und das Presselement (13) sowie einen Pressbereich (P) bilden, wobei dem Presselement (13) in einer Förderrichtung (T_{P}) des Produktstroms hinter dem Pressbereich (P) ein Abführelement (15) zum Abführen von nach dem Pressen am Presselement (13) verbleibenden Resten des Pressguts zugeordnet ist, wobei das Abführelement (15) ein aktiv antreibbares, endloses Abführband (16) zum Abführen der am Presselement (13) verbleibenden Reste des Pressguts in einer Abführrichtung (T_{R}) ist, **dadurch gekennzeichnet, dass** das Abführband (16) in einem Wirkbereich (W) mit dem Presselement (13) zur Übernahme der Reste des Pressguts in einem minimalen Abstand zum Presselement (13) positioniert ist und um einen starren, ortsfesten Transportabschnitt (26) und einen relativ zum starren Transportabschnitt (26) schwenkbaren Übernahmeabschnitt (27) geführt ist, wobei der schwenkbare Übernahmeabschnitt (27) zur Schaffung eines beweglichen Abschnitts des Abführbandes (16) um eine Schwenkachse (A) schwenkbar am Transportabschnitt (26) gelagert ist.

2. Vorrichtung (10) nach Anspruch 1, **dadurch gekennzeichnet, dass** das Abführband (16) und das Presselement (13) im Wirkbereich (W) gegenläufig angetrieben sind.

3. Vorrichtung (10) nach Anspruch 1 oder 2, **dadurch gekennzeichnet, dass** das Abführband (16) als Abstreiferband (24) ein aus Kunststoff bestehendes, umlaufend antreibbares Gliederband mit mindestens einem quer zur Abführrichtung (T_{R}) verlaufenden Steg (25) ist, wobei das Abstreiferband (24) derart zum Presselement (13) eingestellt ist, dass zwischen jedem Steg (25) und dem Presselement (13) ein minimaler Abstand besteht.

4. Vorrichtung (10) nach Anspruch 1, **dadurch gekennzeichnet, dass** der schwenkbare Übernahmeabschnitt (27) federbelastet am Rahmengestell (11) gehalten ist.

5. Vorrichtung (10) nach Anspruch 1, **dadurch gekennzeichnet, dass** der Schwenkachse (A) ein Stellarm (28) zugeordnet ist, der über ein Federelement (29) mit einem Stellelement (30) verbunden ist, das am Rahmengestell (11) angeordnet ist.

6. Vorrichtung (10) nach Anspruch 5, **dadurch gekennzeichnet, dass** der Stellarm (28) mittels der Federkraft des Federelementes (29) an einem am Rahmengestell (11) angeordneten Anschlagelement (33) anliegt, wobei das Anschlagelement (33) zur Einstellung der Größe des Abstandes zwischen dem Abführband (16) im Bereich des schwenkbaren Übernahmeabschnitts (27) und der Oberfläche des Presselementes (13), also im Wirkbereich (W), verstellbar ausgebildet ist.

7. Vorrichtung (10) nach einem oder mehreren der Ansprüche 1 bis 6, **dadurch gekennzeichnet, dass** das Presselement (13) ein von außen an die Mantelfläche M unter Umschlingung eines Teils des Umfangs der Hohltrommel (12) anpressbares, endloses Pressband (23) ist, das umlaufend antreibbar ist und ein zur Hohltrommel (12) weisendes Obertrum (23a) und ein Untertrum (23b) umfasst, wobei auf der der Hohltrommel (12) entgegengesetzten Seite des Pressbandes (23) eine Stützvorrichtung (35) für das Pressband (23) mit wenigstens einem Stützelement (36) angeordnet ist.

8. Vorrichtung (10) nach Anspruch 7, **dadurch gekennzeichnet, dass** das Pressband (23) in der Förderrichtung (T_{P}) des Produktstroms hinter dem Pressbereich (P) um eine relativ zur Hohltrommel (12) einstellbare Andrückwalze geführt ist, wobei der schwenkbare Übernahmeabschnitt (27) des Abführbandes (16) unterhalb der Andrückwalze positioniert ist.

9. Vorrichtung (10) nach Anspruch 7 oder 8, **dadurch gekennzeichnet, dass** der sich über die gesamte Breite des Pressbandes (23) erstreckende, schwenkbare Übernahmeabschnitt (27) des Abführbandes (16) im Wirkbereich (W) eine aufsteigende Ausrichtung aufweist, während der Untertrum (23b) des Pressbandes (23) im Wirkbereich (W) eine absteigende Ausrichtung aufweist.

10. Vorrichtung (10) nach einem oder mehreren der Ansprüche 7 bis 9, **dadurch gekennzeichnet, dass** das Abführband (16) und das Pressband (23) zur Bildung eines flächigen Wirkbereiches (W) mindestens abschnittsweise im Wesentlichen parallel verlaufen.

11. Verfahren zum Trennen von miteinander vermischten Stoffen unterschiedlicher Fließfähigkeit, umfassend die Schritte:
- Zuführen eines aus Pressgut bestehenden Produktstroms in einen Produkteinzugskeil (14) einer Vorrichtung (10) zum Trennen von miteinander vermischten Stoffen unterschiedlicher Fließfähigkeit, der durch eine Hohltrommel (12) mit perforierter Mantelfläche (M) und ein Presselement (13) gebildet ist,
- umlaufendes Antreiben der Hohltrommel (12) und des Presselementes (13) zum Einziehen des Produktstroms in einen zwischen der Hohltrommel (12) und dem Presselement (13) gebildeten Pressbereich (P),
- wobei die leichter fließenden Bestandteile des Pressguts mittels des Presselementes (13) durch die Perforation der Mantelfläche (M) in den inneren Hohlraum (H) der Hohltrommel (12) gepresst und abgeführt werden, während die schwerer fließenden Bestandteile des Pressguts als am Presselement (13) verbleibende Reste des Pressguts in einer Förderrichtung (T_{P}) des Produktstroms hinter dem Pressbereich (P) mittels eines dem Presselement (13) zugeordneten Abführelementes (15) abgeführt werden, wobei die nach dem Pressen am Presselement (13) verbleibenden Reste des Pressguts mittels eines aktiv antreibbaren, endlosen Abführbandes (16) aktiv in einer Abführrichtung (T_{R}) abgeführt werden, **dadurch gekennzeichnet, dass** die nach dem Pressen am Presselement (13) verbleibenden Reste des Pressguts mittels des umlaufend antreibbaren Abführbandes (16) von einem endlosen, umlaufend antreibbaren Pressband (23) als Presselement (13) in einem flächigen Wirkbereich (W) gelöst, übernommen und gegen die Antriebsrichtung (A_{P}) des Pressbandes (23) abgeführt werden.

12. Verfahren nach Anspruch 11, **dadurch gekennzeichnet, dass** die nach dem Pressen am Presselement (13) verbleibenden Reste des Pressguts im Wesentlichen horizontal aus der Vorrichtung (10) abgeführt und etwa mittig in einen Auffangbehälter (19) abgegeben werden.

13. Verfahren nach Anspruch 11 oder 12, **dadurch gekennzeichnet, dass** es mit einer Vorrichtung (10) nach einem oder mehreren der Ansprüche 1 bis 10 durchgeführt wird.

## Claims

1. Apparatus (10) for separating substances of different flowability that are mixed together, comprising a frame structure (11), a hollow drum (12) having a perforated circumferential surface (M) which can be driven in a revolving manner and is mounted on the frame structure (11), a pressing element (13) which lies externally in the region of the circumferential surface (M) of the hollow drum (12) and can be driven in a revolving manner, such that the hollow drum (12) and the pressing element (13) form a product intake wedge (14) for feeding in a product stream, consisting of material to be pressed, between the hollow drum (12) and the pressing element (13), and also form a pressing region (P), wherein there is associated with the pressing element (13) downstream of the pressing region (P) in the conveying direction (T_{P}) of the product stream a discharge element (15) for discharging residues of the material to be pressed that remain on the pressing element (13) after pressing, wherein the discharge element (15) is an actively drivable, endless discharge belt (16) for discharging the residues of the material to be pressed that remain on the pressing element (13) in a discharge direction (T_{R}),
**characterised in that** the endless discharge belt (16) is guided around a rigid, fixed transport section (26) and a take-over section (27) which is pivotable relative to the rigid transport section (26), wherein the pivotable take-over section (27) is mounted on the transport section (26) so as to be pivotable about a pivot axis (A) in order to create a movable section of the discharge belt (16).

2. Apparatus (10) according to claim 1, **characterised in that** the discharge belt (16) and the pressing element (13) are driven in opposite directions in the operating region (W).

3. Apparatus (10) according to claim 1 or 2, **characterised in that** the discharge belt (16), as a stripping belt (24), is a link belt which consists of plastics material and can be driven in a revolving manner and which has at least one web (25) running transversely to the discharge direction (T_{R}), wherein the stripping belt (24) is so adjusted relative to the pressing element (13) that there is a minimal distance between each web (25) and the pressing element (13).

4. Apparatus (10) according to claim 1, **characterised in that** the pivotable take-over section (27) is mounted on the frame structure (11) in a spring-loaded manner.

5. Apparatus (10) according to claim 1, **characterised in that** there is associated with the pivot axis (A) an adjusting arm (28) which is connected *via* a spring element (29) to an adjusting element (30) which is arranged on the frame structure (11).

6. Apparatus (10) according to claim 5, **characterised in that** the adjusting arm (28) lies, by means of the spring force of the spring element (29), against an abutment element (33) arranged on the frame structure (11), wherein the abutment element (33) is configured so as to be movable for adjustment of the size of the distance between the discharge belt (16) in the region of the pivotable take-over section (27) and the surface of the pressing element (13), that is to say in the operating region (W).

7. Apparatus (10) according to one or more of claims 1 to 6, **characterised in that** the pressing element (13) is an endless press belt (23) which can be pressed from outside against the circumferential surface M, while wrapping around part of the circumference of the hollow drum (12), and which can be driven in a revolving manner and comprises an upper run (23a), facing the hollow drum (12), and a lower run (23b), wherein there is arranged on the side of the press belt (23) remote from the hollow drum (12) a support apparatus (35) for the press belt (23) having at least one support element (36).

8. Apparatus (10) according to claim 7, **characterised in that** the press belt (23) is guided downstream of the pressing region (P) in the conveying direction (T_{P}) of the product stream around a pressure roller which is adjustable relative to the hollow drum (12), wherein the pivotable take-over section (27) of the discharge belt (16) is positioned beneath the pressure roller.

9. Apparatus (10) according to claim 7 or 8, **characterised in that** the pivotable take-over section (27), extending over the entire width of the press belt (23), of the discharge belt (16) has an ascending orientation in the operating region (W), while the lower run (23b) of the press belt (23) has a descending orientation in the operating region (W).

10. Apparatus (10) according to one or more of claims 7 to 9, **characterised in that** the discharge belt (16) and the press belt (23) run substantially parallel at least in some regions in order to form a planar operating region (W).

11. Method for separating substances of different flowability that are mixed together, comprising the steps:
- feeding a product stream, consisting of material to be pressed, into a product intake wedge (14) of an apparatus (10) for separating substances of different flowability that are mixed together, which product intake wedge is formed by a hollow drum (12) having a perforated circumferential surface (M) and a pressing element (13),
- driving the hollow drum (12) and the pressing element (13) in a revolving manner in order to draw the product stream into a pressing region (P) formed between the hollow drum (12) and the pressing element (13),
- wherein the more readily flowing constituents of the material to be pressed are pressed by means of the pressing element (13) through the perforation of the circumferential surface (M) into the inner cavity (H) of the hollow drum (12) and are discharged, while the less readily flowing constituents of the material to be pressed, as residues of the material to be pressed that remain on the pressing element (13), are discharged downstream of the pressing region (P) in the conveying direction (T_{P}) of the product stream by means of a discharge element (15) associated with the pressing element (13),
wherein the residues of the material to be pressed that remain on the pressing element (13) after pressing are actively discharged in a discharge direction (T_{R}) by means of an actively drivable, endless discharge belt (16), **characterised in that** the residues of the material to be pressed that remain on the pressing element (13) after pressing, by means of the discharge belt (16) which can be driven in a revolving manner, are detached from an endless press belt (23), which can be driven in a revolving manner, as the pressing element (13) in a planar operating region (W), are taken over and are discharged contrary to the drive direction (A_{P}) of the press belt (23).

12. Method according to claim 11, **characterised in that** the residues of the material to be pressed that remain on the pressing element (13) after pressing are discharged from the apparatus (10) substantially horizontally and delivered approximately centrally into a collecting container (19).

13. Method according to claim 11 or 12, **characterised in that** it is carried out with an apparatus (10) according to one or more of claims 1 to 10.

## Revendications

1. Dispositif (10) pour séparer des matières de fluidités différentes mélangées entre elles, comprenant un bâti (11), un tambour creux (12) pouvant être entraîné en circulation et monté sur le bâti (11) avec une surface d'enveloppe (M) perforée, un élément de pressage (13) pouvant être entraîné en circulation, situé de l'extérieur dans la zone de la surface d'enveloppe (M) du tambour creux (12), de telle sorte que le tambour creux (12) et l'élément de pressage (13) forment un coin d'introduction de produit (14) pour l'amenée d'un flux de produit constitué de matière à presser entre le tambour creux (12) et l'élément de pressage (13) ainsi qu'une zone de pressage (P), un élément d'évacuation (15) étant associé à l'élément de pressage (13) après la zone de pressage (P) dans une direction de convoyage (T_{P}) du flux de produit pour évacuer les résidus de la matière à presser restant sur l'élément de pressage (13) après le pressage, l'élément d'évacuation (15) étant une bande d'évacuation (16) sans fin pouvant être entraînée activement pour évacuer les résidus de la matière à presser restant sur l'élément de pressage (13) dans une direction d'évacuation (T_{R}), **caractérisé en ce que** la bande d'évacuation (16) est positionnée dans une zone d'action (W) avec l'élément de pressage (13) pour la prise en charge des résidus de la matière à presser à une distance minimale de l'élément de pressage (13) et est guidé autour d'une section de transport (26) fixe rigide et d'une section de prise en charge (27) pivotante par rapport à la section de transport (26) rigide, la section de prise en charge (27) pivotante étant montée sur la section de transport (26) de manière pivotante autour d'un axe de pivotement (A) pour créer une section mobile de la bande d'évacuation (16).

2. Dispositif (10) selon la revendication 1, **caractérisé en ce que** la bande d'évacuation (16) et l'élément de pressage (13) sont entraînés en sens inverse dans la zone d'action (W).

3. Dispositif (10) selon la revendication 1 ou 2, **caractérisé en ce que** la bande d'évacuation (16) est, en tant que bande de raclage (24), une bande articulée en matière plastique pouvant être entraînée en circulation avec au moins une nervure (25) s'étendant transversalement à la direction d'évacuation (T_{R}), la bande de raclage (24) étant ajustée par rapport à l'élément de pressage (13) de telle sorte qu'il existe une distance minimale entre chaque nervure (25) et l'élément de pressage (13).

4. Dispositif (10) selon la revendication 1, **caractérisé en ce que** la section de prise en charge (27) pivotante est maintenue sollicitée par ressort sur le bâti (11).

5. Dispositif (10) selon la revendication 1, **caractérisé en ce que** l'axe de pivotement (A) est associé à un bras de réglage (28) qui est relié par l'intermédiaire d'un élément à ressort (29) à un élément de réglage (30) qui est agencé sur le bâti (11).

6. Dispositif (10) selon la revendication 5, **caractérisé en ce que** le bras de réglage (28) s'applique, au moyen de la force de ressort de l'élément à ressort (29), contre un élément de butée (33) agencé sur le bâti (11), l'élément de butée (33) étant configuré de manière à pouvoir être réglé pour ajuster la taille de la distance entre la bande d'évacuation (16) dans la zone de la section de prise en charge (27) pivotante et la surface de l'élément de pressage (13), c'est-à-dire dans la zone d'action (W).

7. Dispositif (10) selon une ou plusieurs des revendications 1 à 6, **caractérisé en ce que** l'élément de pressage (13) est une bande de pressage (23) sans fin pouvant être pressée de l'extérieur contre la surface d'enveloppe M en entourant une partie de la périphérie du tambour creux (12), qui peut être entraînée en circulation et qui comprend un brin supérieur (23a) orienté vers le tambour creux (12) et un brin inférieur (23b), un dispositif de soutien (35) pour la bande de pressage (23) avec au moins un élément de soutien (36) étant agencé sur le côté de la bande de pressage (23) opposé au tambour creux (12).

8. Dispositif (10) selon la revendication 7, **caractérisé en ce que** la bande de pressage (23) est guidée après la zone de pressage (P) dans la direction de convoyage (T_{P}) du flux de produit autour d'un rouleau presseur ajustable par rapport au tambour creux (12), la section de prise en charge (27) pivotante de la bande d'évacuation (16) étant positionnée en dessous du rouleau presseur.

9. Dispositif (10) selon la revendication 7 ou 8, **caractérisé en ce que** la section de prise en charge (27) pivotante de la bande d'évacuation (16), s'étendant sur toute la largeur de la bande de pressage (23), présente une orientation ascendante dans la zone d'action (W), tandis que le brin inférieur (23b) de la bande de pressage (23) présente une orientation descendante dans la zone d'action (W).

10. Dispositif (10) selon une ou plusieurs des revendications 7 à 9, **caractérisé en ce que** la bande d'évacuation (16) et la bande de pressage (23) s'étendent essentiellement parallèlement, au moins par sections, pour former une zone active (W) plane.

11. Procédé de séparation de matières de fluidités différentes mélangées entre elles, comprenant les étapes :
- l'amenée d'un flux de produit constitué de matière à presser dans un coin d'introduction de produit (14) d'un dispositif (10) pour la séparation de matières de fluidités différentes mélangées entre elles, qui est formé par un tambour creux (12) avec une surface d'enveloppe (M) perforée et un élément de pressage (13),
- l'entraînement en rotation du tambour creux (12) et de l'élément de pressage (13) pour introduire le flux de produit dans une zone de pressage (P) formée entre le tambour creux (12) et l'élément de pressage (13),
- les constituants de la matière à presser s'écoulant plus facilement étant pressés au moyen de l'élément de pressage (13) à travers la perforation de la surface d'enveloppe (M) dans la cavité intérieure (H) du tambour creux (12) et évacués, tandis que les constituants de la matière à presser s'écoulant plus difficilement sont évacués en tant que résidus de la matière à presser restant sur l'élément de pressage (13) dans une direction de convoyage (T_{P}) du flux de produit après la zone de pressage (P) au moyen d'un élément d'évacuation (15) associé à l'élément de pressage (13),
les résidus de la matière à presser restant sur l'élément de pressage (13) après le pressage étant évacués activement dans une direction d'évacuation (T_{R}) au moyen d'une bande d'évacuation (16) sans fin pouvant être entraînée activement, **caractérisé en ce que** les résidus de la matière à presser restant sur l'élément de pressage (13) après le pressage sont détachés d'une bande de pressage (23) sans fin pouvant être entraînée en circulation en tant qu'élément de pressage (13) au moyen de la bande d'évacuation (16) pouvant être entraînée en circulation dans une zone active (W) plane, pris en charge et évacués à l'encontre de la direction d'entraînement (A_{P}) de la bande de pressage (23).

12. Procédé selon la revendication 11, **caractérisé en ce que** les résidus de la matière à presser restant sur l'élément de pressage (13) après le pressage sont évacués du dispositif (10) essentiellement horizontalement et déposés à peu près au milieu dans un récipient collecteur (19).

13. Procédé selon la revendication 11 ou 12, **caractérisé en ce qu'**il est réalisé avec un dispositif (10) selon une ou plusieurs des revendications 1 à 10.
